# EUROPEAN PATENT APPLICATION

(11) **EP 2 881 908 A1**
(43) Date of publication of application: **10.06.2015**
(21) Application number: 14196136.7
(22) Date of filing: 03.12.2014
(51) Int. Cl.: G06Q 20/28, G06Q 20/32

(54) **NFC top-up**

(30) Priority: 03.12.2013 GB 201321335
(71) Applicant: Vodafone IP Licensing Limited, The Connection Newbury Berkshire RG14 2FN (GB)
(72) Inventor: Ziebacz, Piotr, London W26BY (GB); Daly, Keith, London W26BY (GB); Egan, Marion, London W26BY (GB); Harney, Pat, London W26BY (GB); Reilly, Viv, London W26BY (GB)
(74) Representative: Boult Wade Tennant

(57) **Abstract**

There is provided a method of crediting a prepay account associated with a subscriber of a mobile network, the subscriber utilising a mobile device. The method comprises: receiving, using near field communication, a unique identifier associated with the subscriber of the mobile network; receiving an indication of an amount to be credited; and, requesting that the mobile network credit a prepay account associated with the subscriber, the request comprising the indication of an amount to be credited.

## Description

### Background

In conventional mobile telecommunications networks, there exists a prepay service model in which credit is purchased in advance of service use. The purchased credit is used to pay for mobile phone services at the point the service is accessed or consumed. If there is no available credit then access to the requested service is denied by the mobile phone network. The process of purchasing credit may sometimes be referred to as top up.

Typically, top ups are performed using e-card vouchers sold in convenience stores, supermarkets and news agents. Subscribers call an Interactive Voice Response (IVR) service and input a 13 digit voucher code to recharge their mobile accounts. The account is then credited with the amount purchased in the store, corresponding to the voucher, and indicated by the 13 digit voucher number.

This is a slow process and is inconvenient for the consumer. To alleviate some of these difficulties, Virtual Private Network (VPN) top up services have been introduced which enable top up to be purchased and credited using third party interfaces such as ATMs or Online Banking. However, not only does this limit the accessibility of top ups to these specific locations but also requires the entry of the mobile phone number of the subscriber into the interface or requires the subscriber to read the number aloud. Subscribers do not feel comfortable exposing their mobile number in public and, in many cases, subscribers enter a wrong digit and top up the wrong device.

### Summary of the invention

According to a first aspect of the invention there is provided a method of crediting a prepay account associated with a subscriber of a mobile network, the subscriber utilising a mobile device. The method comprises: receiving, using near field communication, a unique identifier associated with the subscriber of the mobile network; receiving an indication of an amount to be credited; and, requesting that the mobile network credit a prepay account associated with the subscriber, the request comprising the indication of an amount to be credited.

The present invention thus provides for a reliable means of crediting a prepay account without exposing the unique identifier of the subscriber. Top up is made simpler and the burden on the user is alleviated. Platforms for improved top up are opened to retailers where they were restricted previously due to limitations in passing subscriber information.

Additionally, text entry mistakes which cause accounts to be credited erroneously are obviated since text entry is no longer required, either in the entry of the unique identifier or the entry of the voucher number. The solution would supplement or replace the existing voucher model for a new and improved framework.

Optionally, the request may comprise the unique identifier. The method may further comprise validating the unique identifier with the mobile network. The unique identifier may be received from the mobile device. The unique identifier may be received in encrypted form and the method may further comprise decrypting the unique identifier. In this way the unique identifier is kept secure.

The method may further comprise, at the mobile device: encrypting the unique identifier of subscriber of the mobile network; and, transmitting the unique identifier using near field communication. The step of encrypting the unique identifier may comprise reading the unique identifier from a subscriber identity module. The encryption and transmission may be performed by an application on a smart card. The smart card may be a Universal Integrated Circuit Card (UICC). Thus the security of the application and information is enhanced and the top up can be performed irrespective of the mobile device in which the card has been inserted.

The may further comprise prompting the subscriber to enter a personal identification number (PIN). The step of prompting the subscriber to enter a PIN may comprise: presenting a user interface to the subscriber on the mobile device; receiving an input PIN input to the user interface; checking the input PIN against a stored PIN; and, transmitting the unique identifier only if the input PIN matched the stored PIN.

The method may further comprise, at the mobile network: receiving the request to credit a prepay account; validating the unique identifier on the mobile network, and, crediting the prepay account based on the validation. The method may further comprise, at the mobile network: sending a message to the mobile device for confirming that credit was successful. The method may further comprise, at the mobile network: sending a message to the vending system for confirming that credit was successful.

Further, the method according to any preceding claim may comprise: processing a payment from the subscriber.

Additionally, the step of requesting that the mobile network credit a prepay account may be performed using a virtual private network.

Further, the unique identifier may be an MSISDN.

According to a second aspect of the present invention there may be provided a method in a mobile device of requesting credit of a prepay account of a subscriber of a mobile network, the method may comprise: encrypting a unique identifier of subscriber of the mobile network; and, transmitting the unique identifier to a crediting system using near field communication.

The method may further comprise transmitting an indication of an amount to be credited using near field communication.

The step of encrypting the unique identifier may comprise reading the unique identifier from a subscriber identity module. The encryption and transmission may be performed by an application on a smart card. The smart card may be a Universal Integrated Circuit Card (UICC).

The method may further comprise: prompting the subscriber to enter a personal identification number (PIN). The step of prompting the subscriber to enter a PIN may comprise: presenting a user interface to the subscriber on the mobile device; receiving an input PIN input to the user interface; checking the input PIN against a stored PIN; and, transmitting the unique identifier only if the input PIN matched the stored PIN.

A system may also be provided for crediting a prepay account of a subscriber of a mobile network, the system configured to carry out the method of the first aspect.

A mobile telecommunications device may also be provided which is configured to carry out the method of the second aspect.

A computer program product or group of products containing instructions which when executed cause a computer to perform the method of the first or second aspect.

### Brief Description of the Drawings

An example of the present invention will now be described in detail with reference to the accompanying drawings, in which:

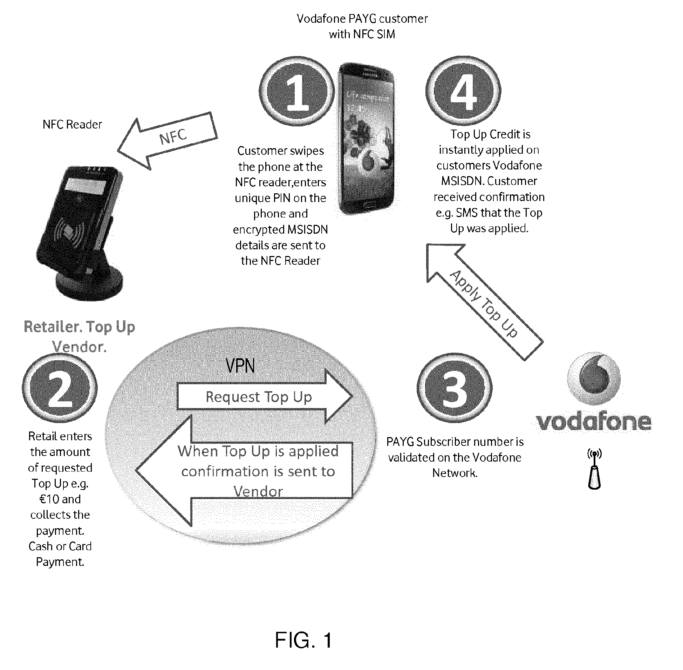

Figure 1 shows a schematic layout of a system of the invention and the process flow.

### Detailed Description

It is known that portable contactless devices, such as, for example, mobile communication devices, such as cellular phones, PDAs (PDA: Personal Data Assistant), or dedicated devices can dispose of a communication interface for wireless short range communication with a target. Such an interface can be used for executing transactions between the mobile device and the target. Typically short range communications such as those described here are used in transactions such as financial transactions allowing making an electronic payment using the mobile device. Another example is an electronic ticketing transaction, in which an electronic ticket is provided by the mobile device and validated by the target.

The contactless communication interface usually comprises a controller that controls the antenna on the lower levels, particularly on the physical level and possibly on the level of the contactless data exchange protocols. On an application level the execution of transactions is controlled by contactless applications. In case of transactions, such as financial transactions, which involve sensitive data, the contactless applications are executed in a secure element connected to the contactless communication interface. The secure element provides a security architecture preventing unauthorized third parties from accessing the sensitive data.

It has already been proposed to integrate the secure element into a smartcard included in the contactless device, which includes a processor for executing applications, and which is coupled to the contactless interface. In case of a mobile communication device, the smart card may be a user identification card, which may be a SIM (Subscriber Identity Module) card according to the GSM (Global System for Mobile Communications) standard or a UICC (Universal Integrated Circuit Card) comprising a USIM (Universal Subscriber Identity Module) application according to the UMTS (Universal Mobile Telecommunications System), for example. Such smart card provides secure identification and/or authentication services towards a mobile communication network, in which the mobile communication device is used. By utilizing the user identification card for executing contactless transactions, the existing security architecture of the user identification card can be used.

Contactless applications executed in a further processor outside of the smart card coupled to the contactless interface may use an interface within the device to access the contactless interface. One example of such interface is the Contactless Communication API (Application Programming Interface) described in the document JSR (Java Specification Request) 257.

The communication between the device and the target uses a short range communication technology, which allows for exchanging data between the device and the target over a short range between several centimeters and several ten centimeters. In one embodiment, the communication is based on at least one of the specifications ISO 14443 Type A, ISO 14443 Type B, ISO 18092 and ISO 15693.

In particular, the NFC technology (NFC: Near Field Communication) may be used, which is specified in ISO 18092 and 21481, ECMA 340, 352 and 356, and ETSI TS 102 109 and implements the aforementioned specifications. The NFC technology allows for contactless communication between devices over a short distance of a few centimeters, for example about 1 to 4 centimeters. The antenna may be configured as a magnetic loop antenna operating at a carrier frequency of 13.56 MHz and a radio signal can be exchanged over a distance of about several centimeters. Moreover, the communication module can be operated in several different modes, which correspond to the different tag types defined in the NFC specifications and which differ in the communication protocols used and in the data transmission rates, for example. Type 1 and type 2 tags are based on the specification ISO 14443 type A, type 3 tags use the specification ISO 18092 and type 4 tags are compatible to the specifications ISO 14443 type A and type B.

Furthermore, an NFC enabled communication module can be operated in an active and in a passive communication mode. In the active communication mode the communication component and the target each generate a high frequency field at the carrier frequency in order to send data to the communication partner. In the passive communication mode only one communication partner, which is called initiator, generates a high frequency field at the carrier frequency that is used by the initiator to transmit data to the other communication partner which is called target. The target uses load modulation for transmitting data to the initiator. This means that the current through the antenna of the target is modulated using a controllable resistor. In the passive communication mode, the communication component may be the initiator of the communication as well as the target. In case the communication component acts as the target, the communication component, and in particular the controller, may be powered by the high frequency field generated by the initiator. For being operable in further operation modes the communication component disposes of a power supply.

In case the communication module implements the NFC technology and in further embodiments, the device can interact with the target in order to execute transactions with the target. The transactions may be payment transactions or ticketing transactions, for example. From the perspective of the user of the device, a transaction may simply be executed by bringing the device in proximity to the target for a relatively short time. Thus, payment can be made or an electronic ticket can be presented for validation by passing the device past the target.

In the device, the transaction is controlled by one or more contactless applications, which control the execution of the transactions and which provide the data necessary for executing the transactions. For each type of transaction, one corresponding contactless application may be provided. Furthermore, a contactless application may be configured to interact with certain targets, such as, for example terminals operated by a certain service provider.

In a preferred embodiment of the present invention subscribers are able to use NFC enabled smart cards to transfer their mobile phone number (MSISDN) directly on to a terminal/vending machine in a store and enter a PIN to confirm a Top Up request. Customers will pay by cash or payment card to the vendor and then the Top Up is applied instantly.

Preferably a SIM application is provided that will send a customer's mobile phone number to an NFC Terminal or till. Optionally a smartphone application may be configured to perform the exchange; however a SIM application provides a more secure environment for the exchange of data.

The proposed solution may advantageously supplement or replace Top Up Vouchers (paper E-Cards) from retail stores and implement a new framework that involves NFC functionality which is new in this environment and a VPN Top Up process which has hitherto not been used in a retail environment due to its inherent limitations, predominantly the requirement to make publically available the mobile phone number of the subscriber.

In general, it is proposed to enable NFC to provide Top Up services. Preferably an application is embedded on the NFC SIM. The application is operable to read the MSISDN from the SIM and transmit an encrypted MSISDN to an NFC reader placed in the retail store.

The application will prompt the subscriber to select a unique personal identification number (PIN). The subscriber will be asked to enter the PIN before the MSISDN is sent to the NFC Reader

Typically an External Partner Top Up platform enables third party Vendors (at the moment only online and bank partners) to sell recharge Top Up. The Top Up requests from Vendor are sent over a VPN.

There are two types of requests sent over the Top Up platform: a validation check to confirm if the subscriber is relevant customer and a request to apply Top Up.

A detailed description of an exemplary implementation of the present invention will now be described in the context of Figure 1. In this framework a third Party vendor supplies the Terminal/NFC reader to the Retailer; the retailer handles the payment; and, the mobile network operator validates the subscriber and applies the Top Up.

Figure 1 illustrates the process described generally above. First, the subscriber swipes the phone at the NFC reader positioned in the retailer or top up vendor's premises. Next, the device presents the user with a user interface prompting the subscriber to enter a unique PIN on the device. The device then checks this unique PIN against a previous PIN stored on the device when the application was set up. If the PINs match then encrypted MISISDN details are sent to the NFC Reader.

The PIN may alternatively be entered prior to the subscriber swiping the phone at the NFC reader to act as a trigger to the process.

Any suitable encryption scheme may be used to encrypt the MSISDN each of which have particular advantages. Examples include public-key encryption and symmetric-key encryption.

When the MSISDN details are received, substantially simultaneously or subsequently, the retailer enters the amount of requested Top Up into the retailer's system for example €10. The retailer then collects payment for the Top Up from the subscriber.

Using a Virtual Private Network (VPN), a request for Top Up is sent from the retailer's system to the mobile network operator. The request may include, or be in conjunction with, the MSISDN and the amount of Top Up. The MSISDN may be sent in decrypted form or may be passed on directly from the device to the mobile network operator in encrypted form where it may be subsequently decrypted.

The MSISDN may then be validated by the mobile network operator. Optionally, when the Top Up is accepted confirmation may be sent to the retailer system.

Once the MSISDN has been validated on the network, the Top Up Credit is applied to the subscriber's account associated with the MSISDN. Optionally, a message, for example an SMS, USSD or other data message, may be sent to the subscriber's device from the mobile network operator to confirm that the Top Up has been applied to their account.

In an alternative embodiment, the mobile device may be equipped with a contactless payment facility such as that described very briefly above and which is substantially known in the art. The retail terminal and device may therefore be operable to collect payment for the Top Up at substantially the same time as retrieving the MSISDN information from the mobile device. This may be performed within the same NFC or contactless communication procedure. At the retail system, the system will process the payment in the usual way with a payment provider and will pass the MSISDN and Top Up information to the mobile network operator to effect the top up of the subscriber's account. Thus the time taken to effect Top Up and payment is substantially improved and the effort of the subscriber and retailer are substantially reduced.

This embodiment may be effected by adding a specific MSISDN identifier (token) as part of the Vodafone™ Smartpass™ payment. This would mean a single tap on the NFC reader since the identifier and payment information would be passed substantially simultaneously. The token could be included as part of the EMV transaction data which includes a crypto gram, to transfer the MSISDN identifier and payment authorisation. The merchant POS would then transmit this data to the operator, which will derive from the payment data and the MSISDN and perform a Top-up.

In an alternative embodiment, rather than the retailer entering the Top Up required the amount may be entered by the subscriber on the mobile device and the amount is passed through to the terminal. Thus there is no need for a human operator of the retailer to be present as the payment can be collected using a self-service machine or through contactless payment as described above. Additionally, the amount to be credited may be entered directly onto the retailer's system by the subscriber.

## Claims

1. A method of crediting a prepay account associated with a subscriber of a mobile network, the subscriber utilising a mobile device, the method comprising:
receiving, using near field communication, a unique identifier associated with the subscriber of the mobile network;
receiving an indication of an amount to be credited; and,
requesting that the mobile network credit a prepay account associated with the subscriber, the request comprising the indication of an amount to be credited.

2. A method according to claim 1 in which the request comprises the unique identifier.

3. A method according to claim 1 or 2, in which the unique identifier is received in encrypted form and in which the method further comprises decrypting the unique identifier.

4. A method according to any preceding claim, further comprising, at the mobile device:
encrypting the unique identifier of subscriber of the mobile network; and,
transmitting the unique identifier using near field communication.

5. A method according to claim 4 in which the step of encrypting the unique identifier comprises reading the unique identifier from a subscriber identity module.

6. A method according to claim 4 or 5, in which the encryption and transmission are performed by an application on a smart card.

7. A method according to any preceding claim, further comprising prompting the subscriber to enter a personal identification number (PIN) and in which the step of prompting the subscriber to enter a PIN comprises:
presenting a user interface to the subscriber on the mobile device;
receiving an input PIN input to the user interface;
checking the input PIN against a stored PIN; and,
transmitting the unique identifier only if the input PIN matched the stored PIN.

8. A method according to any preceding claim, further comprising, at the mobile network:
receiving the request to credit a prepay account;
validating the unique identifier on the mobile network, and,
crediting the prepay account based on the validation.

9. A method according to any preceding claim further comprising:
processing a payment from the subscriber.

10. A method according to any preceding claim in which the step of requesting that the mobile network credit a prepay account is performed using a virtual private network.

11. A system for crediting a prepay account of a subscriber of a mobile network, the system configured to carry out the method of any of claims 1 to 10.

12. A mobile telecommunications device configured to request credit of a prepay account of a subscriber of a mobile network, the method comprising:
encrypting a unique identifier of subscriber of the mobile network; and,
transmitting the unique identifier to a crediting system using near field communication.

13. A computer program product or group of products containing instructions which when executed cause a computer to perform the method of any of claims 1 to 12.
